# EUROPEAN PATENT SPECIFICATION

(11) **EP 3 556 819 B1**
(45) Date of publication and mention of the grant of the patent: **27.05.2020**
(21) Application number: 18168459.8
(22) Date of filing: 20.04.2018
(51) Int. Cl.: C09D 123/08, C08L 23/08, C08L 23/04, C08L 53/00, C08L 51/06, C08L 33/10, C08L 67/02, B32B 27/32, E04F 15/00, E04F 15/10

(54) **MULTILAYER OR MONOLAYER FLOORING**
MEHRSCHICHTIGER ODER EINSCHICHTIGER BODENBELAG
PLANCHER MULTICOUCHE OU MONOCOUCHE

(43) Date of publication of application: 23.10.2019
(73) Proprietor: GERFLOR, 69100 Villeurbanne (FR)
(72) Inventor: KROSCHWALD, Felix, 44227 DORTMUND (DE)
(74) Representative: Cabinet Laurent & Charras

(56) References cited:
- WO-A1-2011/063849
- WO-A1-2014/005631

## Description

### FIELD OF THE INVENTION

The invention relates to a multilayer or monolayer flooring made of a composition comprising a thermoplastic polymer, an ethylene-vinyl acetate (EVA) polymer and an ethylene-butyl acrylate (EBA).

This flooring is preferably free of PVC and/or any fibrous material.

### BACKGROUND OF THE INVENTION

Many kinds of floor covering materials are well known; they include polymer based multilayer and monolayer floorings.

In general, each layer of a multilayer flooring affords specific properties. For instance, a layer comprising a non-woven of fiberglass may improve the rigidity of the flooring. On the other hand, a polyolefin upper layer may improve the wear resistance of the flooring. Specific intermediate layers may contain fire retardant additives.

Most monolayer floorings of the prior art contain poly(vinyl chloride) (PVC). It is an object of a present invention to provide an alternative to such PVC based floorings with comparable mechanical properties.

Alternatives have therefore been developed, for instance polyolefin based floorings (e.g. WO2011/063849A1).

However, most alternative floorings do not reach the mechanical properties of conventional PVC flooring.

As a result, there is still a need to develop PVC free floorings.

The flooring according to the invention actually addresses the above problems thanks to a combination of specific polymers.

### SUMMARY OF THE INVENTION

The invention relates to a multilayer or monolayer flooring, preferably poly(vinyl chloride) (PVC) free. Due to the presence of a thermoplastic polymer, an EVA polymer and an EBA polymer, this flooring exhibits properties such as mechanical strength, rigidity and resistance to scratches.

The multilayer or monolayer flooring may be prepared in rolls, sheets, tiles or planks. It may be laid free or glued down to an existing flooring. Alternatively, when prepared in tiles or planks, the multilayer or monolayer flooring may be provided with coupling means such as complementary tongue and groove profiles on its edges.

More specifically, the invention relates to a flooring comprising at least a VA layer, wherein said VA layer comprises:
- at least one thermoplastic polymer,
- at least one ethylene-vinyl acetate (EVA) polymer,
- at least one ethylene-butyl acrylate (EBA) polymer,
wherein the at least one EVA polymer of the VA layer contains overall at least 30 mol% of vinyl acetate monomer.

This VA layer is preferably free of poly(vinyl chloride) (PVC).

The monolayer flooring according to the invention consists of a VA layer.

The multilayer flooring according to the invention comprises a VA layer. The VA layer is preferably the top layer of the flooring. The VA layer may be laminated with a bottom layer.

The bottom layer may be obtained from thermoplastic polymer, preferentially mixed with at least one filler. Preferably, the thermoplastic polymers are selected from the group consisting of polypropylene and polypropylene copolymers (PP), high density polyethylene (HDPE), linear low density polyethylene (LLDPE), low density polyethylene (LDPE), poly(methyl methacrylate) (PMMA), glycol-modified polyethylene terephthalate (PETG), ethylene-octene copolymers (EO), and mixtures thereof. The bottom layer is preferably free of PVC.

When the bottom layer comprises at least one filler, said filler is preferably selected from the group consisting of chalk, kaolin, talcum, alumina trihydrate, magnesium hydroxide, hydroxyapatite, glimmer, graphite, microspheres, titanium dioxide, dolomite, antimony trioxide, zinc borate, zinc stannate and zinc hydroxy stannate.
A bottom layer may be compact or foamed.

A bottom layer may advantageously contain recycled thermoplastic polymer. Incorporation of recycled thermoplastic polymer may diminish the costs of manufacturing the multilayer flooring.

Alternatively, bottom layers may be obtained from natural or synthetic rubber or linoleum.
Alternatively, a bottom layer may be obtained from polyvinyl chloride (PVC), or plasticized polyvinyl chloride (PVC) due to the small cost of this polymer and the availability of recycled polyvinyl chloride.

Alternatively, a bottom layer may be obtained from the same composition as the VA layer according to the invention.

The VA layer may be laminated, glued or bound using a double sided adhesive to the bottom layer. Alternatively, the VA layer and the bottom layer may be bound by hot pressing or using a double belt press.

The VA layer of the monolayer or multilayer flooring may be coated with a varnish.

The thermoplastic (TP) polymer of the VA layer is preferably selected from the group consisting of polypropylene and polypropylene copolymers (PP), high density polyethylene (HDPE), linear low density polyethylene (LLDPE), low density polyethylene (LDPE), poly(methyl methacrylate) (PMMA), glycol-modified polyethylene terephthalate (PETG), ethylene-octene copolymers (EO), and mixtures thereof.

According to another embodiment, the thermoplastic (TP) polymer of the VA layer may be selected from the group consisting of polypropylene and polypropylene copolymers (PP), high density polyethylene (HDPE), linear low density polyethylene (LLDPE), low density polyethylene (LDPE), glycol-modified polyethylene terephthalate (PETG), ethylene-octene copolymers (EO), and mixtures thereof.

The VA layer has an amount of thermoplastic polymer that preferably ranges from 5 to 20 %, more preferably from 8 to 12 %, by weight as compared to the weight of the VA layer.

The at least one EVA polymer of the VA layer of the flooring contains overall at least 30 mol% of vinyl acetate monomer, preferably from 30 to 90 mol%, even more preferably from 40 to 50 mol%. In other terms, the EVA polymer(s) contain overall at least 30 mol% of vinyl acetate (VA) monomer. The at least one EVA polymer may therefore relate to a mixture of EVA polymers, wherein the overall amount of VA monomers in the mixture is at least 30 mol%. The remaining molar percentage of monomer is preferably solely ethylene.

The ethylene-vinyl acetate (EVA) polymer of the VA layer is preferably a copolymer of ethylene and vinyl acetate monomers. It preferably does not contain any other monomer. It is preferably a linear polymer.

The VA layer has an amount of EVA polymer that preferably ranges from 5 to 20 %, more preferably from 5 to 10 %, by weight as compared to the weight of the VA layer.

The EVA polymer improves the polarity of the composition of the VA layer due to the presence of vinyl acetate monomers. It improves the stickiness properties, the adhesion of a finishing coating (varnish) and the incorporation of fillers. These properties are drastically reduced if the EVA polymer has less than 30 mol% of vinyl acetate monomer.

The ethylene-butyl acrylate (EBA) polymer of the VA layer is preferably a copolymer of ethylene and butyl acrylate monomers. It preferably does not contain any other monomer. It is preferably a linear polymer.

The VA layer has an amount of EBA polymer that preferably ranges from 5 to 30 %, more preferably from 10 to 20 %, by weight as compared to the weight of the VA layer.

The EBA polymer affords intermediate mechanical properties, as well as flexibility and elongation at break.

The VA layer may further comprise at least one compatibilizing agent and/or one filler coupling agent.

According to a specific embodiment, the VA layer may further comprise:
- at least one compatibilizing agent, which is selected from the group consisting of maleic anhydride grafted polymers and glycidyl methacrylate grafted polymers,
   and/or
- at least one filler coupling agent, which is selected from the group of organo silicones like alkoxy silane, organo silane, silicone oligomers, silanols, siloxanes, silyl chlorides and silyl hydrides.

According to another specific embodiment, the VA layer may further comprise between 1 and 9 wt% of at least one compatibilizing and/or at least one filler coupling agent, by weight as compared to the weight of the VA layer, preferably between 3 and 5 wt%.

The VA layer may also further comprise at least one homogeneizing agent.

Said homogeneizing agent is preferably selected from the group consisting of styrenic block copolymers like SEBS (Styrene Ethylene Butylene Styrene), SEPS (Styrene Ethylene Propylene Styrene), SBS (Styrene Butadiene Styrene), SIS (Styrene Isoprene Styrene), and SBC (Styrene Butadiene Copolymer).

The presence of a homogeneizing agent improves the homogeneity of the VA layer according to the invention. The flooring can therefore be a homogeneous monolayer or a multilayer having a homogeneous VA layer. In other terms, the different components of the VA layer are homogeneously mixed within the VA layer. Indeed, the homogeneizing agent improves the mixing between polymers having different polarities i.e. the thermoplastic polymer, the EVA polymer and the EBA polymer.

In the presence of homogeneizing agent, the VA layer preferably comprise between 1 and 10 wt% of at least one homogeneizing agent, by weight as compared to the weight of the VA layer, preferably between 4 and 7 wt%.

According to another specific embodiment, the VA layer may further comprise at least one filler.

When the VA layer further comprises at least one filler, said filler is preferably selected from the group consisting of chalk, kaolin, talcum, alumina trihydrate, magnesium hydroxide, hydroxyapatite, glimmer, graphite, microspheres, titanium dioxide, dolomite, antimony trioxide, zinc borate, zinc stannate and zinc hydroxy stannate.

Typically, fillers, such as kaolin, improve the resistance of the VA layer to scratches.

According to another specific embodiment, the VA layer may comprise between 20 and 70 wt% of at least one filler, by weight as compared to the weight of the VA layer, preferably between 45 and 55 wt%.

The VA layer preferably contains, by weight as compared to the weight of the VA layer:
- between 5 and 20 wt% of at least one thermoplastic polymer,
- between 5 and 20 wt% of at least one ethylene-vinyl acetate (EVA) polymer,
- between 5 and 30 wt% of at least one ethylene-butyl acrylate (EBA) polymer,
- between 1 and 9 wt% of at least one compatibilizing agent and/or at least one filler coupling agent,
- between 1 and 10 wt% of at least one homogeneizing agent,
- between 20 and 70 wt% of at least one filler.

The VA layer may comprise additional additives, for instance a stabilizer that protects the polymers against thermo-oxidative degradation or a lubricant or an acid scavenger or a release agent.

The overall amount of these additives preferably ranges from 0.1 to 2.0 %, more preferably from 0.5 to 1.0 %, by weight as compared to the weight of the VA layer.

The VA layer is preferably free of any fibrous backing. It may also be free of any liquid plasticizer.

Typically, a sheet of the VA layer according to the invention has a thickness that preferably ranges from 0.7 mm to 3 mm, preferably from 1.50 mm to 2.5 mm, more preferably from 1.90 mm to 2.10 mm.

Typically, a multilayer flooring according to the invention has a thickness that preferably ranges from 1.4 mm to 7 mm, preferably from 2 mm to 5 mm, more preferably from 2 mm to 4 mm.

A sheet of the flooring according to the invention can have a width that preferably matches or exceed the nominal given value.

A sheet of the flooring according to the invention can have a length that preferably matches or exceed the nominal given value.

This flooring can be used in any kind of applications, preferably in any of the following: airplane, office, public transport, housing, industry, sports.

The invention also relates to a process for preparing the above described flooring, according to the following steps:
a) preparing a mixture containing:
   - at least one thermoplastic polymer,
   - at least one ethylene-vinyl acetate (EVA) polymer,
   - at least one ethylene-butyl acrylate (EBA) polymer,
      wherein the at least one EVA polymer of the VA layer contains overall at least 30 mol% of vinyl acetate monomer,
b) melting said mixture at a temperature of at least 170°C,
c) forming a VA layer, for instance by extruding said melted mixture.
d) optionally, laminating the VA layer to a bottom layer,
e) optionally, coating the VA layer with a varnish.

Steps a) and b) can be simultaneously carried out. Step b) is preferably carried out at a temperature of between 170 and 250 °C, more preferably between 180 and 200 °C.

Step d) relates to the formation of a multilayer flooring having a VA layer.

Step e) relates to the formation of a coated monolayer or multilayer flooring.

The invention and its advantages will become more apparent to one skilled in the art from the following examples.

### EXAMPLES

Eight monolayer floorings have been prepared according to the invention. Their respective compositions are listed in table 1. The monolayers are made a VA layer.

**Table 1: flooring composition**

| Flooring | 1 | 2 | 3 | 4 | 5 | 6 | 7 | 8 |
|---|---|---|---|---|---|---|---|---|
| TP | 10⁽²⁾ | 10⁽¹⁾ | 10⁽²⁾ | 10⁽¹⁾ | 9⁽¹⁾ | 9⁽¹⁾ | 10⁽¹⁾ | 10⁽¹⁾ |
| EBA^{(g)} | 18 | 19 | 19 | 24 | 22.5 | 22.5 | 19 | 19 |
| EVA | 13⁽³⁾ | 14⁽³⁾ | 14⁽³⁾ | 14⁽⁴⁾ | 10⁽³⁾ | 10⁽³⁾ | 9⁽⁴⁾+10⁽⁵⁾ | 9⁽⁴⁾+10⁽⁵⁾ |
| Homo geniz er^{(c)} | 4 | 5 | 5 | - | 5.5 | 5.5 | - | - |
| Compatibilizer | 2.5⁽⁸⁾ | 2⁽⁸⁾ | 2⁽⁸⁾ | 2⁽⁸⁾ | 3⁽⁷⁾ | 3⁽⁶⁾ | 2⁽⁸⁾ | 2⁽⁸⁾ |
| Filler 1 ^{(a)} | 29.5 | 29.5 | 29.5 | 29.5 | 29.1 | 29.1 | 30 | 29.5 |
| Filler 2^{(b)} | 24.3 | 19.6 | 19.6 | 19.6 | 20 | 20 | 19.1 | 19.1 |
| Lubricant^{(d)} | 0.6 | 0.8 | 0.8 | 0.8 | 0.8 | 0.8 | 0.8 | 0.8 |
| Stabilizer^{(e)} | 0.1 | 0.1 | 0.1 | 0.1 | 0.1 | 0.1 | 0.1 | 0.1 |
| Filler coupling agent^{(f)} | - | - | - | - | - | - | - | 0.5 |

| | | | | | | | | |
|---|---|---|---|---|---|---|---|---|
| TP = thermoplastic polymer ^{(a)} chalk ^{(b)} kaolin ^{(c)} SEBS: linear triblock copolymer based on styrene and ethylene/butylene ^{(d)} calcium stearate ^{(e)} pentaerythritol tetrakis 3-(3,5-di-tert-butyl-4-hydroxyphenyl)propionate; CAS number: 6683-19-8 ^{(f)} ultra-high molecular weight siloxane polymer dispersed in ethylene vinyl acetate polymer ^{(g)} copolymer consisting of ethylene and butyl acrylate ⁽¹⁾ polypropylene copolymer ⁽²⁾ high-density polyethylene ⁽³⁾ ethylene-vinylacetate copolymer ⁽⁴⁾ ethylene-vinylacetate copolymer ⁽⁵⁾ ethylene-vinylacetate copolymer ⁽⁶⁾ terpolymer of ethylene, acrylic ester and glycidyl methacrylate ⁽⁷⁾ SEBS polymer with maleic anhydride (MA) grafted ⁽⁹⁾ modified polyethylene grafted with maleic anhydride (MA) | | | | | | | | |

Floorings 1-8 have been calendered at 170°C. Their properties are listed in Table 2.

**Table 2: properties of floorings 1-8.**

| Flooring | 1 | 2 | 3 | 4 | 5 | 6 | 7 | 8 |
|---|---|---|---|---|---|---|---|---|
| Tensile Strength (N/mm²) | 6.66 | 8.14 | 5.16 | 8.85 | 7.89 | 8.14 | 8.71 | 7.68 |
| Elongation at break (%) | 87.26 | 152.54 | 241.65 | 126.94 | 127.58 | 151.75 | 152.73 | 174.86 |
| 1% Modulus (N/mm) | 3.35 | 2.9 | 3.11 | 3.58 | 2.11 | 2.54 | 3.81 | 4.04 |
| Torsion (°) | 79 | 78 | 73 | 67 | 78 | 65 | 65.8 | 66 |
| Density (g/cm³) | 1.421 | 1.3459 | 1.3467 | 1.3474 | 1.3713 | 1.3658 | 1.3603 | 1.3416 |
| Thickness (mm) | 2 | 2 | 1.98 | 2.01 | 1.99 | 1.9 | 2.04 | 2.09 |
| Weight (g/m²) | 2842.08 | 2691.84 | 2693.44 | 2694.72 | 2742.56 | 2731.6 | 2420.64 | 2683.1 |
| Shore D | 38.97 | 38.93 | 38.7 | 41.9 | 40.3 | 40.1 | 42.85 | 42.38 |

As shown in Table 2, these eight flooring according to the invention exhibit sufficient properties in terms of mechanical strength, rigidity and resistance to scratches.

To illustrate the influence of the VA-content of the VA layer varnish adhesion and glue adhesion, a comparative example was prepared. VA-content influences surface free energy which is known to be a prerequisite for varnish adhesion and glue adhesion.

In a first example, a monolayer flooring consisting in a VA layer according to the invention and comprising 13 wt% of EVA with 28% VA-content has been prepared. Gluing strength was measured according to EN1372:2015. This VA layer obtained a gluing strength of 0.27 N/mm.

A second monolayer flooring consisting of a VA layer according to the invention and comprising 14 wt% of EVA with 50 % VA-content has been prepared. This second VA layer obtained a gluing test value of 0.75 N/mm.

## Claims

1. Flooring comprising at least a VA layer, wherein said VA layer comprises:
- at least one thermoplastic polymer,
- at least one ethylene-vinyl acetate (EVA) polymer,
- at least one ethylene-butyl acrylate (EBA) polymer,
wherein the at least one EVA polymer of the VA layer contains overall at least 30 mol% of vinyl acetate monomer.

2. Flooring according to claim 1, ***characterized in that*** the thermoplastic polymer is selected from the group consisting of polypropylene, polypropylene copolymers (PP), high density polyethylene (HDPE), linear low density polyethylene (LLDPE), low density polyethylene (LDPE), poly(methyl methacrylate) (PMMA), glycol-modified polyethylene terephthalate (PETG), ethylene-octene copolymers (EO), and mixtures thereof.

3. Flooring according to claim 1 or 2, ***characterized in that*** the VA layer further comprises at least one compatibilizing agent and/or at least one filler coupling agent.

4. Flooring according to any of claims 1 to 3, ***characterized in that*** the VA layer further comprises:
- at least one compatibilizing agent, which is selected from the group consisting of maleic anhydride grafted polymers and glycidyl methacrylate grafted polymers,
and/or
- at least one filler coupling agent, which is selected from the group of organo silicones like alkoxy silane, organo silane, silicone oligomers, silanols, siloxanes, silyl chlorides and silyl hydrides.

5. Flooring according to any of claims 1 to 4, ***characterized in that*** the VA layer further comprises between 1 and 9 wt% of at least one compatibilizing and/or at least one filler coupling agent, by weight as compared to the weight of the VA layer, preferably between 3 and 5 wt%.

6. Flooring according to any of claims 1 to 5, ***characterized in that*** the VA layer further comprises at least one homogeneizing agent.

7. Flooring according to any of claims 1 to 6, ***characterized in that*** the VA layer further comprises at least one homogeneizing agent, which is a styrenic block copolymers selected from the group consisting of styrene ethylene butylene styrene copolymer, styrene ethylene propylene styrene copolymer, styrene butadiene styrene copolymer, styrene isoprene styrene copolymer.

8. Flooring according to any of claims 1 to 7, ***characterized in that*** the VA layer further comprises between 1 and 10 wt% of at least one homogeneizing agent, by weight as compared to the weight of the VA layer, preferably between 4 and 7 wt%.

9. Flooring according to any of claims 1 to 8, ***characterized in that*** the VA layer further comprises at least one filler.

10. Flooring according to any of claims 1 to 9, ***characterized in that*** the VA layer further comprises at least one filler, which is selected from the group consisting of chalk, kaolin, talcum, alumina trihydrate, magnesium hydroxide, hydroxyapatite, glimmer, graphite, microspheres, titanium dioxide, dolomite, antimony trioxide, zinc borate, zinc stannate and zinc hydroxy stannate.

11. Flooring according to any of claims 1 to 10, ***characterized in that*** the VA layer further comprises between 20 and 70 wt% of at least one filler, by weight as compared to the weight of the VA layer, preferably between 45 and 55 wt%.

12. Flooring according to any of claims 1 to 11, ***characterized in that*** the VA layer is homogeneous.

13. Flooring according to any of claims 1 to 12, ***characterized in that*** the VA layer contains by weight as compared to the weight of the VA layer:
- between 5 and 20 wt% of at least one thermoplastic polymer,
- between 5 and 20 wt% of at least one ethylene-vinyl acetate (EVA) polymer,
- between 5 and 30 wt% of at least one ethylene-butyl acrylate (EBA) polymer,
- between 1 and 9 wt% of at least one compatibilizing agent and/or at least one filler coupling agent,
- between 1 and 10 wt% of at least one homogeneizing agent,
- between 20 and 70 wt% of at least one filler.

14. Flooring according to any of claims 1 to 13, ***characterized in that*** the VA layer is free of any fibrous backing or free of poly(vinyl chloride).

15. Flooring according to any of claims 1 to 14, ***characterized in that*** the flooring is a monolayer flooring made of the VA layer.

## Patentansprüche

1. Bodenbelag mit mindestens einer VA- Schicht, wobei diese VA- Schicht enthält:
- mindestens ein thermoplastisches Polymer,
- mindestens ein Ethylen- Vinylacetat (EVA)- Polymer,
- mindestens ein Ethylen- Butylacetat (EBA)- Polymer,
wobei das mindestens eine EVA- Polymer der VA- Schicht insgesamt mindestens 30 mol% Vinylacetat- Monomer enthält.

2. Bodenbelag nach Anspruch 1, ***dadurch gekennzeichnet, dass*** das thermoplastische Polymer ausgewählt wird aus der Gruppe bestehend aus Polypropylen, Polypropylen- Copolymeren (PP), Polyethylen hoher Dichte (HDPE), linearem Polyethylen niedriger Dichte (LLDPE), Polyethylen niedriger Dichte (LDPE), Poly(methylmethacrylat) (PMMA), mit Glycol modifiziertem Polyethylen- Terephthalat (PETG), Ethylen- Okten- Copolymeren (EO), und Mischungen daraus.

3. Bodenbelag nach Anspruch 1 oder 2, ***dadurch gekennzeichnet, dass*** die VA-Schicht weiterhin mindestens einen kompatibilisierenden Wirkstoff und/ oder mindestens einen Füllstoff- Haftvermittler enthält.

4. Bodenbelag nach irgendeinem der Ansprüche 1 bis 3, ***dadurch gekennzeichnet, dass*** die VA- Schicht weiterhin umfasst:
- mindestens einen kompatibilisierenden Wirkstoff, der ausgewählt wird aus der Gruppe bestehend aus Maleinsäureanhydrid- gepfropften Polymeren, und Glycidyl-Methacrylat- gepfropften Polymeren,
und/ oder
- mindestens einem Füllstoff- Haftvermittler, ausgewählt aus der Gruppe der siliziumorganischen Verbindungen wie Alkoxysilan, Organsilan, Silikonoligomeren, Silanolen, Siloxanen, Silylchloriden und Silylhydriden.

5. Bodenbelag nach irgendeinem der Ansprüche 1 bis 4, ***dadurch gekennzeichnet, dass*** die VA- Schicht weiterhin zwischen 1 und 9 Gew.% mindestens eines kompatibilisierenden Wirkstoffs und/ oder eines Füllstoff- Haftvermittlers umfasst, nach Gewicht, verglichen mit dem Gewicht der VA- Schicht, vorzugsweise zwischen 3 und 5 Gew.-%.

6. Bodenbelag nach irgendeinem der Ansprüche 1 bis 5, ***dadurch gekennzeichnet, dass*** die VA- Schicht weiterhin mindestens einen homogenisierenden Wirkstoff enthält.

7. Bodenbelag nach irgendeinem der Ansprüche 1 bis 6, ***dadurch gekennzeichnet, dass*** die VA- Schicht weiterhin mindestens einen homogenisierenden Wirkstoff enthält, bei dem es sich um ein Styrol-Block-Copolymer handelt, ausgewählt aus der Gruppe bestehend aus Styrol- Ethylen- Propylen- Styrol- Copolymer, StyrolButadien- Styrol- Copolymer, Styrol- Isopren- Styrol- Copolymer.

8. Bodenbelag nach irgendeinem der Ansprüche 1 bis 7, ***dadurch gekennzeichnet, dass*** die VA- Schicht weiterhin zwischen 1 und 10 Gew.-% mindestens eines homogenisierenden Wirkstoffs enthält, nach Gewicht, verglichen mit dem Gewicht der VA- Schicht, vorzugsweise zwischen 4 und 7 Gew.-%.

9. Bodenbelag nach irgendeinem der Ansprüche 1 bis 8, ***dadurch gekennzeichnet, dass*** die VA- Schicht weiterhin mindestens einen Füllstoff enthält.

10. Bodenbelag nach irgendeinem der Ansprüche 1 bis 9, ***dadurch gekennzeichnet, dass*** die VA- Schicht weiterhin mindestens einen Füllstoff enthält, ausgewählt aus der Gruppe bestehend aus Kreide, Kaolin, Talkum, Aluminiumoxid- Trihydrat, Magnesiumhydroxid, Hydroxyapatit, Glimmer, Graphit, Mikrosphären, Titandioxid, Dolomit, Antimontrioxid, Zinkborat, Zinkstannat und Zinkhydroxy-Stannat.

11. Bodenbelag nach irgendeinem der Ansprüche 1 bis 10, ***dadurch* gekennzeichnet, *dass*** die VA- Schicht weiterhin zwischen 20 und 70 Gew.-% mindestens eines Füllstoffes umfasst nach Gewicht, verglichen mit dem Gewicht der VA- Schicht, vorzugsweise zwischen 45 und 55 Gew.-%.

12. Bodenbelag nach irgendeinem der Ansprüche 1 bis 11, ***dadurch gekennzeichnet, dass*** die VA- Schicht homogen ist.

13. Bodenbelag nach irgendeinem der Ansprüche 1 bis 12, ***dadurch gekennzeichnet, dass*** die VA- Schicht nach Gewicht, verglichen mit dem Gewicht der VA- Schicht enthält:
- zwischen 20 Gew.-% mindestens eines thermoplastischen Polymers,
- zwischen 5 und 20 Gew.-% mindestens eines Ethylen- Vinylacetat (EVA)-Polymers,
- zwischen 5 und 30 Gew.-% mindestens eines Ethylen- Butylacetat (EBA)-Polymers,
- zwischen 1 und 9 Gew.-% mindestens eines kompatibilisierenden Wirkstoffs und/ oder eines Füllstoff- Haftvermittlers,
- zwischen 1 und 10 Gew.-% mindestens eines homogeneisierenden Wirkstoffs,
- zwischen 20 und 70 Gew.-% mindestens eines Füllstoffs.

14. Bodenbelag nach irgendeinem der Ansprüche 1 bis 13, ***dadurch gekennzeichnet, dass*** die VA- Schicht frei von allen faserhaltigen Hinterfütterungen oder frei von Poly(vinylchlorid) ist.

15. Bodenbelag nach irgendeinem der Ansprüche 1 bis 14, ***dadurch gekennzeichnet, dass*** es sich bei dem Bodenbelag um einen einschichtigen Belag aus der VA- Schicht handelt.

## Revendications

1. Revêtement de sol comprenant au moins une couche de VA, ladite couche de VA comprenant :
- au moins un polymère thermoplastique,
- au moins un polymère d'éthylène-acétate de vinyle (EVA),
- au moins un polymère d'éthylène-acrylate de butyle (EBA),
dans lequel le au moins un polymère d'EVA de la couche de VA contient globalement au moins 30 % en mole de monomère d'acétate de vinyle.

2. Revêtement de sol selon la revendication 1, **caractérisé en ce que** le polymère thermoplastique est choisi dans le groupe comprenant polypropylène, copolymères de polypropylène (PP), polyéthylène haute densité (HDPE), polyéthylène linéaire basse densité (LLDPE), polyéthylène basse densité (LDPE), poly(méthacrylate de méthyle) (PMMA), polyéthylène téréphtalate modifié au glycol (PETG), copolymères d'éthylène-octène (OE), et des mélanges de ceux-ci.

3. Revêtement de sol selon la revendication 1 ou 2, **caractérisé en ce que** la couche de VA comprend en outre au moins un agent compatibilisant et/ou au moins un agent de couplage de charge.

4. Revêtement de sol selon l'une des revendications 1 à 3, **caractérisé en ce que** la couche de VA comprend en outre :
- au moins un agent compatibilisant, qui est choisi dans le groupe constitué par des polymères greffés d'anhydride maléique et des polymères greffés de méthacrylate de glycidyle,
et/ou
- au moins un agent de couplage de charge, qui est choisi dans le groupe des organosilicones comme l'alcoxysilane, l'organosilane, les oligomères de silicone, les silanols, les siloxanes, les chlorures de silyle et les hydrures de silyle.

5. Revêtement de sol selon l'une quelconque des revendications 1 à 4, **caractérisé en ce que** la couche de VA comprend en outre entre 1 et 9 % en poids d'au moins un agent compatibilisant et/ou d'au moins un agent de couplage de charge, en poids par comparaison au poids de la couche de VA, de préférence entre 3 et 5 % en poids.

6. Revêtement de sol selon l'une des revendications 1 à 5, **caractérisé en ce que** la couche de VA comprend en outre au moins un agent d'homogénéisation.

7. Revêtement de sol selon l'une quelconque des revendications 1 à 6, **caractérisé en ce que** la couche de VA comprend en outre au moins un agent d'homogénéisation, qui est un copolymère séquencé styrénique choisi dans le groupe constitué par un copolymère de styrène-éthylène-butylène-styrène, un copolymère de styrène-éthylène-propylène-styrène, un copolymère de styrènebutadiène-styrène, un copolymère de styrène-isoprène-styrène.

8. Revêtement de sol selon l'une quelconque des revendications 1 à 7, **caractérisé en ce que** la couche de VA comprend en outre entre 1 et 10 % en poids d'au moins un agent d'homogénéisation, en poids par comparaison au poids de la couche de VA, de préférence entre 4 et 7 % en poids.

9. Revêtement de sol selon l'une des revendications 1 à 8, **caractérisé en ce que** la couche de VA comprend en outre au moins une charge.

10. Revêtement de sol selon l'une quelconque des revendications 1 à 9, **caractérisé en ce que** la couche de VA comprend en outre au moins une charge, qui est choisie dans le groupe comprenant craie, kaolin, talc, trihydrate d'alumine, hydroxyde de magnésium, hydroxyapatite, mica, graphite, microsphères, dioxyde de titane, dolomite, trioxyde d'antimoine, borate de zinc, stannate de zinc et hydroxystannate de zinc.

11. Revêtement de sol selon l'une quelconque des revendications 1 à 10, **caractérisé en ce que** la couche de VA comprend en outre entre 20 et 70 % en poids d'au moins une charge, en poids par comparaison au poids de la couche de VA, de préférence entre 45 et 55 % en poids.

12. Revêtement de sol selon l'une des revendications 1 à 11, **caractérisé en ce que** la couche de VA est homogène.

13. Revêtement de sol selon l'une des revendications 1 à 12, **caractérisé en ce que** la couche de VA contient en poids, par comparaison au poids de la couche de VA :
- entre 5 et 20 % en poids d'au moins un polymère thermoplastique,
- entre 5 et 20 % en poids d'au moins un polymère d'éthylène-acétate de vinyle (EVA),
- entre 5 et 30 % en poids d'au moins un polymère d'éthylène-acrylate de butyle (EBA),
- entre 1 et 9 % en poids d'au moins un agent compatibilisant et/ou d'au moins un agent de couplage de charge,
- entre 1 et 10 % en poids d'au moins un agent d'homogénéisation,
- entre 20 et 70 % en poids d'au moins une charge.

14. Revêtement de sol selon l'une des revendications 1 à 13, **caractérisé en ce que** la couche de VA est exempte de tout support fibreux ou exempte de poly(chlorure de vinyle).

15. Revêtement de sol selon l'une quelconque des revendications 1 à 14, **caractérisé en ce que** le revêtement de sol est un revêtement de sol monocouche constitué de la couche de VA.
